# EUROPEAN PATENT SPECIFICATION

(11) **EP 1 479 539 B1**
(45) Date of publication and mention of the grant of the patent: **30.06.2010**
(21) Application number: 04010667.6
(22) Date of filing: 05.05.2004
(51) Int. Cl.: B60C 25/138

(54) **Machine for fitting and removing tires and rims of vehicle wheels**
Maschine zum Auf- und Abmontieren von Reifen und Felgen von Kraftfahrzeugrädern
Machine pour le montage et le démontage de pneus et de jantes de roues de véhicules

(30) Priority: 21.05.2003 IT MO20030145
(43) Date of publication of application: 24.11.2004
(73) Proprietor: SICAM S.r.l., 42015 Correggio (Reggio Emilia) (IT)
(72) Inventor: Bartoli, Pietro, 42015 Corregio (Prov. of Reggio Emilia) (IT)
(74) Representative: Brogi, Graziano

(56) References cited:
- EP-A- 0 499 825
- EP-A- 1 201 467
- EP-A- 1 366 933
- EP-A- 1 479 538
- DE-U1- 20 121 433

## Description

The present invention relates to a machine for fitting and removing tires and rims of vehicle wheels.

Machines for fitting and removing tires on and from vehicle wheel rims, conventionally known as tire changing machines, have long been known.

These machines are substantially constituted by a frame for supporting means for gripping and turning a rim of a wheel being worked about a rotation axis and a working assembly that is provided with a tool for fitting and removing the tire on and from the rim and with at least one pair of arms for supporting respective bead breaker tools.

The bead breaker tools are suitable to be inserted, during removal, between the beads of the tire and the corresponding annular lips of the rim, so as to separate them and facilitate the subsequent insertion of the removal tool.

Such arms are generally associated with means for translational actuation toward or away from each other, which allow to adjust the relative distance between the bead breaker tools depending on the width of the rim being worked.

The bead breaker tools are therefore supported so that they can move parallel to the rotation axis and at a set distance from said axis.

The grip and rotation means generally provide a rotating plate for supporting the rim being worked, which is associated with means for fastening the rim on said plate.

The supporting plate is associated with means for moving toward and away from the bead breaker tools, so as to position the peripheral region of the rim mounted on the plate at the path of the bead breaker tools.

However, these known tire changing machines have some limitations in use, since they are not suitable for working certain types of rim, such as those that have different diameters for keying the tire at the inner and outer side walls, where the expression "outer side wall" designates the side wall that remains exposed when the rim is fitted on the vehicle and the expression "inner side wall" designates the opposite side wall.

Patent documents EP 0 499 825 A1, EP 1 201 467 A2, DE 201 21 433 U1 disclose various embodiment and solutions concerning machines for the removal/fitting of tires and/or rims of vehicle wheels, in which machines both tire bead breaker tools for separating the tire beads from the flanges of the wheel rim and Fitting/removal tools for gripping and completely removing the tire from the wheel rim are provided.

However even these known embodiments, though proposing interesting details and features in connection with the fitting and removing of the wheel tires and rims, appear in general to require further improvements, in particular in order to allow quicker intervention timers on the wheel to be handled, as well as a greater versatility for handling vehicle wheels of different sizes and diameters including both wheel for usual cars and wheels for motor-lorries or trucks.

There are also mentioned the embodiments disclosed by patent documents EP 1 479 538 A2 and EP 1 366 933 A2 having a filing date and a publication date respectively prior to and after the effective filing date of the present patent.

Also these latter known embodiments, for tire removal/fitting machines, appear to request to be further improved and for instance to be still more flexible and efficient for the handling of wheels of different width, diameter and type.

Therefore, known tire changing machines are susceptible of further improvements aimed in particular at increasing their flexibility in use.

The aim of the present invention is to provide said improvements.

Within this aim, an object of the present invention is to provide a machine that is simple, relatively easy to provide in practice, safe in use, effective in operation, and has a relatively low cost.

This aim and this and other objects that will become better apparent hereinafter are achieved by the present machine for fitting and removing tires and rims of vehicle wheels, which comprises all the features as recited by the main independent claim 1.

Further characteristic and advantages of the present invention will become better apparent from the following detailed description of a preferred but not exclusive embodiment of a machine for fitting and removing tires and rims of vehicle wheels, illustrated by way of non-limiting example in the accompanying drawings, wherein:
Figure 1 is a schematic perspective view of the machine according to the invention in a possible operating configuration;
Figure 2 is a schematic partial perspective view of the machine of Figure 1 ion another operating configuration;
Figure 3 is a schematic perspective view of a portion of the working assembly of the machine according to the invention in a first operating configuration;
Figure 4 is a schematic perspective view of the portion of the working assembly of Figure 3 in a second operating configuration;
Figure 5 is a schematic perspective view of the portion of the working assembly of Figure 3 in a third operating configuration.

With reference to the figures, the reference numeral 1 generally designates a machine for fitting and removing tires and rims of vehicle wheels.

The machine 1 comprises a frame 2 for supporting means 3 for gripping and turning a rim of a conventional vehicle wheel, not shown in the figures, about at least one horizontal rotation axis A, and a working assembly 4, which is provided with at least one tool 5 for fitting and/or removing a tire on and/or from the rim and with a pair of bead breaker tools 6 that can be associated on opposite sides of the rim being worked.

The frame 2 comprises a footing 2a, which is constituted by a first portion for supporting the tool 5 and the bead breaker tools 6 and a second portion for supporting the means 3.

The bead breaker tools 6 are supported by the footing 2a so that they can slide in a direction that is parallel to the axis A and are associated with means for translational actuation in such direction, such means not being shown in the figures, so as to adjust the relative distance between the bead breaker tools 6 according to the width of the rim fitted on the machine 1.

The actuation means can have at least one first fluid-operated linear actuator of a conventional type, not shown in the figures, which is interposed between the bead breaker tools 6, or two first actuators, which are each interposed between the footing 2a and a corresponding bead breaker tool 6 if the movements of the two bead breaker tools 6 are independent.

Each bead breaker tool 6 is constituted by an element 7 for supporting a contoured roller 8, which is suitable to be inserted between the rim and the corresponding side wall of the tire and is associated with such element so that it can rotate freely.

The bead breaker tools 6 are associated with respective mutually independent assemblies 9 for movement toward and away from the axis A.

If the rim being worked has different inside and outside keying diameters for the corresponding tire, it is therefore possible to arrange the rollers 8 appropriately with respect to the axis A by way of the movement assemblies 9.

The movement assemblies 9 actuate the translational motion of the corresponding bead breaker tools 6 horizontally and at right angles to the axis A.

In the particular embodiment shown, the movement assemblies 9 are of the automatic type.

Each movement assembly 9 comprises a telescopic arm 10 for supporting the corresponding bead breaker tool 6, which is associated with the corresponding element 7 and is supported by the footing 2a so that it is horizontal and can slide parallel to the axis A along a straight guide 2b provided in the footing, and a second fluid-operated linear actuator, not shown in the figures, which is functionally associated with the telescopic arm 10, the opening/closure of the second actuator being suitable to extend/contract the arm and therefore move the corresponding roller 8 toward/away from the axis A.

Each element 7 is detachably coupled to the corresponding telescopic arm 10 by way of a fixing pivot 11.

Each movement assembly 9 comprises means for actuating the corresponding second actuator, which are not shown because they are of a conventional type and are substantially constituted by valve means that are functionally associated with the second actuator and by an element for actuating such valve means, which is constituted for example by a lever, a pedal, a pushbutton or the like.

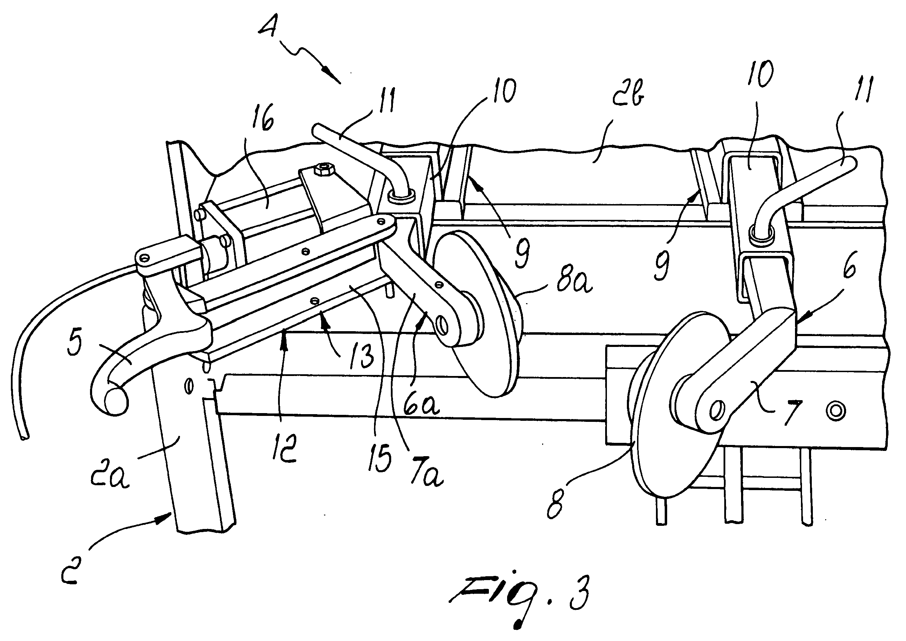

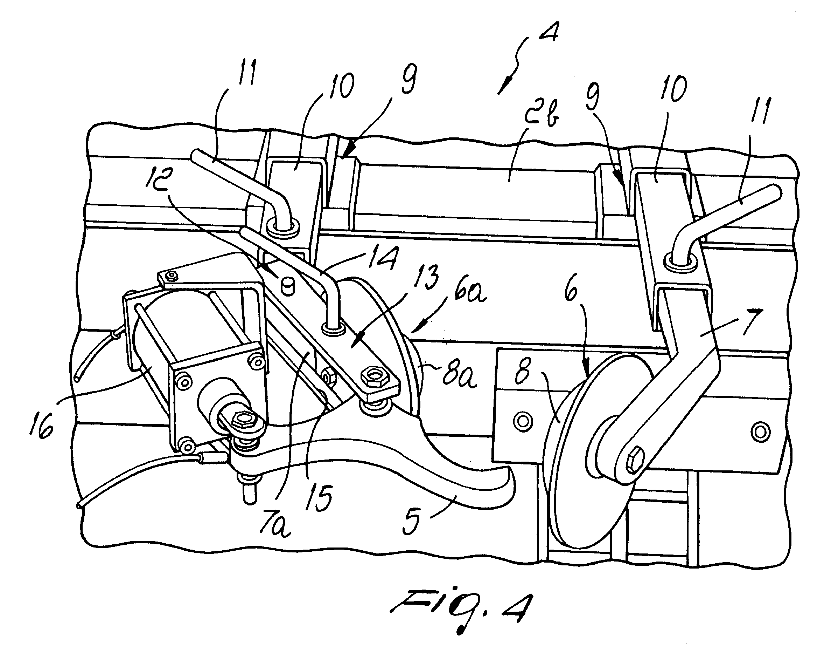

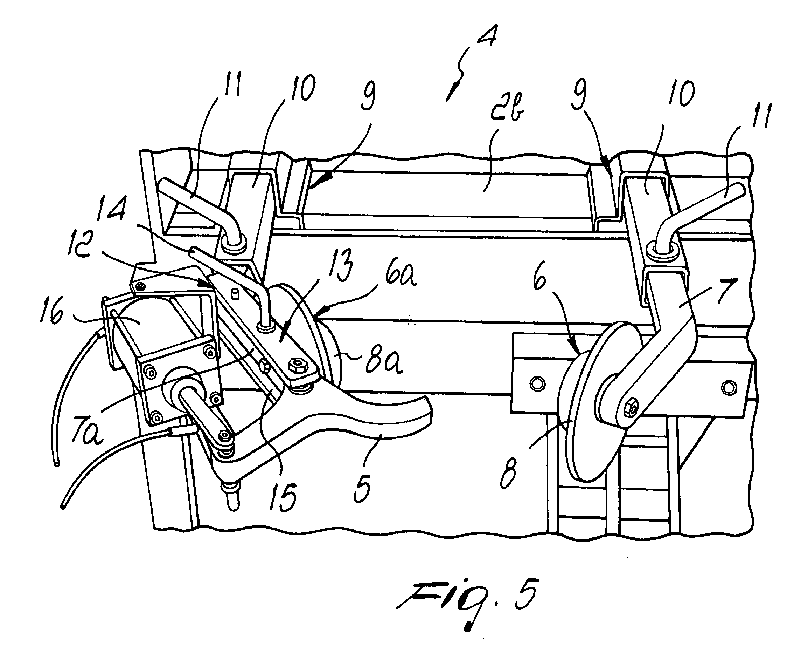

Advantageously, in the particular embodiment shown, the tool 5 is associated in combination with one of the two bead breaker tools 6a and can move alternately between an inactive configuration (Figure 3), in which it is spaced from the working area of the corresponding roller 8a, so as to not interfere with said roller during bead breaking, and an active configuration (Figures 4 and 5).

During bead breaking, the tool 5 is arranged in the inactive configuration, while during assembly and/or disassembly of the tire on/from the rim, turned about the axis A by the means 3, the tool 5 is arranged in the active configuration.

Articulation means 12 are interposed between the tool 5 and the element 7a of the bead breaker tool 6a and comprise a lever 13 for supporting the tool 5, the opposite ends of which are articulately associated, about respective vertical axes, to the element 7a and to the tool 5 respectively.

The lever 13 is associated with the element 7a so that it can oscillate between the inactive configuration and the active configuration.

The rotation of the lever 13 with respect to the element 7a can be actuated manually, but alternative embodiments of the invention, in which automatic actuation means are provided, are also possible.

The articulation means 12 further comprise means for locking the lever 13 in the active configuration, which in the particular embodiment shown are of the interference-fit type and are constituted by a pin 14 inserted in corresponding matching holes formed in the lever 13 and in the element 7a.

The lever 13 is provided with a seat 15 for accommodating the element 7a in the active configuration.

The lever 13 is constituted by two mutually parallel linkages, which are spaced so as to form the seat 15; the lever 13 is longer than the element 7a, so that in the active configuration the tool 5 is arranged so as to protrude from such element beyond the roller 8a.

The tool 5 is articulately associated with the end of the lever 13 between a configuration for insertion between the rim and the tire (Figure 4) and a configuration for gripping and moving the tire (Figure 5).

The machine 1 has an assembly for moving the tool 5 between the insertion configuration and the grip and movement configuration, which is constituted by a third fluid-operated linear actuator 16 that is interposed between the lever 13 and the tool 5.

The tool 5 is constituted by two portions that are mutually inclined and blended so as to form a sort of L-shaped configuration, is articulated to the lever 13 at the region where said portions blend, and has an end that is associated with the third actuator 16 and an opposite end that is hook-shaped and suitable to act during fitting and/or removal.

The means 3 have a surface for supporting the rim being worked, which is formed by a conventional plate 17, preferably of the self-centering type, which is associated with means 18 for fastening the rim on said plate.

The plate 17 is associated with conventional motor means 19 for rotational actuation, which are arranged to the rear of the plate.

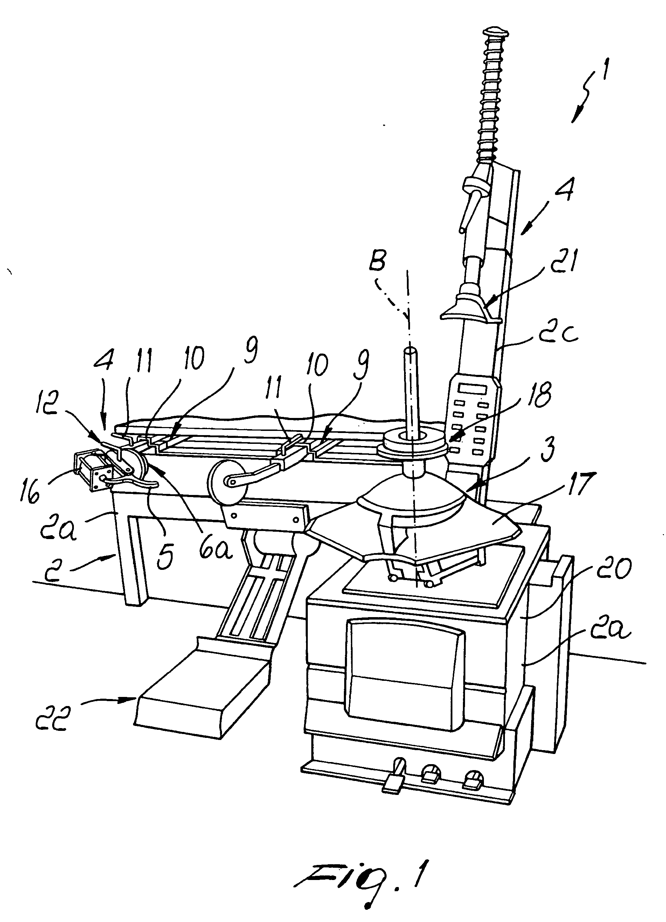

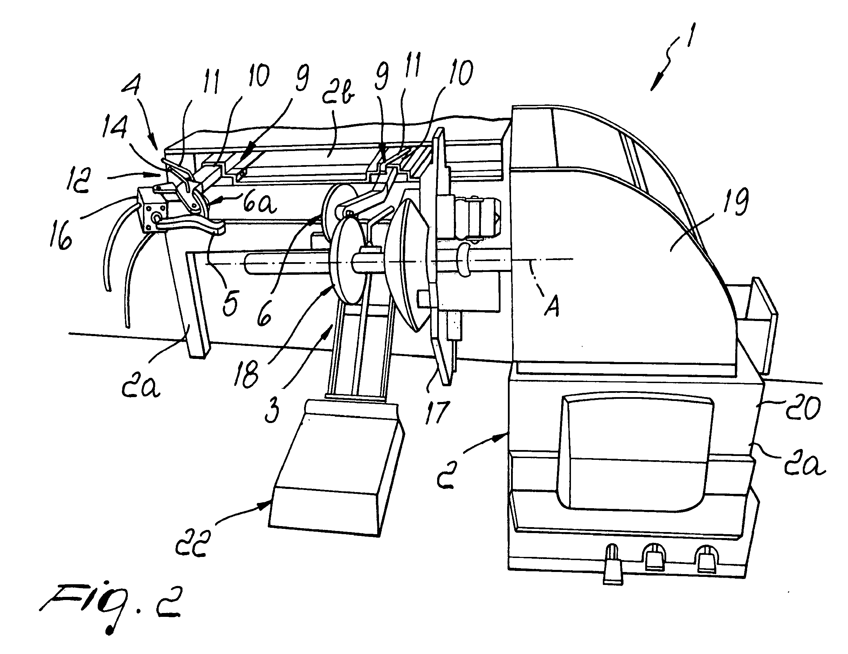

Conveniently, the plate 17 is articulated in a lower region to the footing 2a about a horizontal axis and can be tilted between a first active configuration (Figure 2), in which it is arranged vertically, and a second active configuration (Figure 1), in which it is arranged horizontally.

The second portion of the footing 2a that supports the means 3 is constituted by a box-like body 20, inside which the motor means 19 are accommodated when the plate 17 is in the second configuration.

In the first configuration, the plate 17 turns the rim about the axis A, and the tool 5 is active during the fitting and/or removal of the tire on and/or from the rim.

In the second configuration, the plate 17 turns the rim about a further rotation axis B, which is arranged vertically.

Conveniently, the working assembly 4 has a second tool 21 for mounting and/or removing the tire on and/or from the rim, which is active when the plate 17 is in the second configuration.

The frame 2 has a column 2c for supporting the second tool 21, which is associated with the footing 2a so that it can oscillate.

The second tool 21 is of the type conventionally provided on tire changing machines.

The machine 1 is further provided with conventional means 22 for lifting and lowering the wheel being worked, which facilitate the loading and unloading of said wheel on and from the plate 17.

The operation of the invention is as follows: the rim being processed is fixed to the plate 17 in the first configuration by way of the fastening means 18.

During the removal of the tire from the wheel, the plate 17 is arranged, at least initially, so that it lies vertically and the bead breaker tools 6 are moved parallel to the axis A and arranged at respective sides of the rim by actuating the first actuators.

By way of the second actuators, instead, the bead breaker tools 6 are moved at right angles to the axis A and are arranged at a distance from the axis that is on the same order of magnitude as the keying diameter of the corresponding side of the rim, so that the bead breaker tools 6 are inserted between said rim and the tire.

By turning the means 3, the bead breaking step is therefore performed.

The bead breaker tools 6 are then moved away from the axis A by way of the second actuators, and the tire can therefore be disengaged and removed from the rim according to the conventional operating method.

The tire can be removed alternatively by means of the tool 5 or by means of the second tool 21.

In the first case, the plate 17 remains in the first configuration and the means 3 actuate the rim so that it turns about the axis A; in the second case, the plate 17 is moved into the second configuration, and the means 3 actuate the rim so that it rotates about the axis B.

Likewise, the tire can be removed from the rim according to the conventional operating method by means of the tool 5 or by means of the second tool 21.

In practice it has been found that the described invention achieves the intended aim and object.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine (1) for fitting and removing tires and rims of vehicle wheels, comprising
a frame (2, 2a),
gripping and rotating means (3), supported by said frame (2, 2a), for gripping and turning a vehicle wheel rim about at least one rotation axis (A, B), said grip and rotating means (3) comprising a surface (17), for supporting said rim, which is suitable to assume alternately a first and a second configuration that are substantially mutually perpendicular, whereby the grip and rotation means (3) turn the rim being worked alternately about a first (A) and a second (B) rotation axis mutually substantially perpendicular, and
a working assembly (4) supported by said frame (2, 2a),
said working assembly (4) being provided with at least one fitting and/or removal tool (5; 5, 21) for fitting and/or removing a tire on and/or from said rim, and comprising at least one pair of bead breaker tools (6, 6a) that can be associated on opposite sides with said rim, are associated with actuation means (9, 2b) for translational actuation in a direction that is substantially parallel to said one rotation axis (A), and are associated with respective mutually independent movement assemblies (9, 10) for moving in an approach and spacing direction from said one rotation axis (A),
said machine being **characterized in that**
said one fitting and/or removal tool (5) is associated with one (6a) of said bead breaker tools so as to be suitable to move alternately between an inactive configuration and an active configuration.

2. The machine according to claim 1, **characterized in that** said approach and spacing direction is substantially perpendicular to said one rotation axis (A).

3. The machine according to one or more of the preceding claims, **characterized in that** said actuation means (9, 2b) comprise at least one first actuator, which is interposed between said bead breaker tools (6, 6a).

4. The machine according to claim 3, **characterized in that** the actuators are two and are each interposed between said frame (2) and a corresponding one of said bead breaker tools (6, 6a), whereby the movements of the bead breaker tools (6, 6a) are mutually independent.

5. The machine according to one or more of the preceding claims, **characterized in that** at least one of said movement assemblies (9) comprises a telescopic arm (10) for supporting the corresponding bead breaker tool (6, 6a).

6. The machine according to one or more of the preceding claims, **characterized in that** at least one of said movement assemblies (9) is of the automatic type.

7. The machine according to one or more of the preceding claims, **characterized in that** at least one of said movement assemblies (9) comprises at least one second fluid-operated linear actuator.

8. The machine according to claim 7 as dependent on claim 5, **characterized in that** said second actuator is functionally associated with said telescopic arm (10), the opening/closure of the second actuator being suitable to actuate the extension/contraction of the telescopic arm (10).

9. The machine according to claim 7, **characterized in that** at least one of said movement assemblies (9) comprises means for actuating said second actuator.

10. The machine according to claim 7, **characterized in that** said actuation means (9) comprise valve means that are functionally associated with said second actuator and at least one actuation element for actuating said valve means which is suitable to actuate alternately the opening or closure of said second actuator.

11. The machine according to claim 10, **characterized in that** said actuation element comprises at least one lever, pedal, pushbutton or the like.

12. The machine according to one or more of the preceding claims, **characterized in that** both of said movement assemblies (9) comprise respective telescopic arms (10) for supporting the corresponding bead breaker tool (6, 6a), which are associated with respective second actuators.

13. The machine according to one or more of the preceding claims, **characterized in that** each one (6, 6a) of said bead breaker tools comprises an element (7, 7a) for supporting a roller (8, 8a) that is suitable to be inserted between said rim and the corresponding side wall of said tire, the roller (8, 8a) being associated with the supporting element (7, 7a) so that it can rotate freely.

14. The machine according to claim 13, **characterized in that** it comprises articulation means (12), which are interposed between said one fitting and/or removal tool (5) and the supporting element (7a) of the associated bead breaker tool (6a).

15. The machine according to claim 14, **characterized in that** said articulation means (12) comprise a lever (13) for supporting said first fitting and/or removal tool (5), which has an end that is articulately associated with said supporting element (7a) so that it said lever (13) can oscillate between said inactive configuration and said active configuration of said one fitting and/or removal tool (5).

16. The machine according to claim 15, **characterized in that** said fitting and/or removal tool (5) is associated with said lever (13) at the opposite end with respect to said end that is articulated to said supporting element (7a).

17. The machine according to claim 15, **characterized in that** said articulation means (12) comprise locking means (14) for temporarily locking said lever (10) in the active configuration of said one fitting and/or removal tool (5).

18. The machine according to claim 17, **characterized in that** said locking means are of the interference-fit type.

19. The machine according to claim 17, **characterized in that** said locking means comprise a pin (14) that is inserted in corresponding matching holes formed in said lever (13) and in said supporting element (7a).

20. The machine according to claim 15, **characterized in that** said one fitting and/or removal tool (5) is associated with said lever (13) so that it is articulated between a configuration for insertion between said rim and said tire and a configuration for gripping and moving said tire.

21. The machine according to claim 20, **characterized in that** it comprises an actuation assembly (16) for moving said one fitting and/or removal tool (5) between the insertion configuration and the grip and movement configuration.

22. The machine according to claim 15, **characterized in that** said lever (10) is substantially longer than said supporting element (7a), the first fitting and/or removal tool (5) protruding from the supporting element (7a) beyond the corresponding roller (8a) in the active configuration.

23. The machine according to claim 15, **characterized in that** said lever (13) comprises a seat (15) for accommodating said supporting element (7a) of the associated bead breaker tool (6a) in the active configuration of said fitting and/or removal tool (5).

24. The machine according to claim 23, **characterized in that** said lever (10) is constituted by two linkages, which are mutually parallel and spaced so as to form said seat (15).

25. The machine according to claim 21, **characterized in that** said actuation assembly comprises at least one third fluid-operated linear actuator (16).

26. The machine according to claim 25, **characterized in that** said third actuator (16) is interposed between said lever (10) and said fitting and/or removal tool (5).

27. The machine according to one or more of the preceding claims, **characterized in that** said first rotation axis (A) is substantially horizontal.

28. The machine according to one or more of the preceding claims, **characterized in that** said second rotation axis (B) is substantially vertical.

29. The machine according to one or more of the preceding claims, **characterized in that** said surface (17), in said first configuration, turns said rim about a substantially horizontal rotation axis (A) and, in said second configuration, turns said rim about a substantially vertical rotation axis (B), **in that** said bead breaker tools (6, 6a) and said at least one fitting and/or removal tool (5) are associable with said rim supported by said surface (17) in the first configuration, and **in that** said working assembly (4) comprises a second fitting and/or removal tool (21), which is associable with said rim supported by said surface (17) in the second configuration.

## Patentansprüche

1. Eine Maschine (1) zum Auf- und Abmontieren von Reifen und Felgen von Kraftfahrzeugrädern, aufweisend einen Rahmen (2, 2a),
eine vom Rahmen (2, 2a) getragene Greif- und Drehvorrichtung (3) zum Ergreifen und Drehen einer Kraftfahrzeugradfelge um mindestens eine Rotationsachse (A, B), wobei die Greif- und Drehvorrichtung (3) eine Oberfläche (17) zum Tragen der Felge aufweist, die geeignet ist, abwechselnd eine erste und eine zweite Konfiguration einzunehmen, die im Wesentlichen senkrecht zueinander sind, wodurch die Greif- und Drehvorrichtung (3) die gerade bearbeitete Felge abwechselnd um eine erste (A) und eine zweite (B) Rotationsachse, die im Wesentlichen senkrecht zueinander sind, dreht, und eine vom Rahmen (2, 2a) getragene Arbeitsbaueinheit (4),
wobei die Arbeitsbaueinheit (4) mit mindestens einem Montage- und/oder Demontagewerkzeug (5; 5, 21) zum Auf- und/oder Abmontieren eines Reifens auf eine Felge und/oder von ihr versehen ist und mindestens ein Paar Wulstbrechwerkzeuge (6, 6a) aufweist, die auf gegenüberliegenden Seiten mit der Felge verbunden werden können, mit Verstellvorrichtungen (9, 2b) für die Verfahrbewegung in eine Richtung verbunden sind, die im Wesentlichen parallel zur Rotationsachse (A) ist, und mit entsprechenden, voneinander unabhängigen Bewegungsbaueinheiten (9, 10) zum Bewegen in einer Annäherungs- und Entfernungsrichtung von der einen Rotationsachse (A) verbunden sind,
wobei die Maschine **dadurch gekennzeichnet ist, dass**
das eine Montage- und/oder Demontagewerkzeug (5) mit einem (6a) der Wulstbrechwerkzeuge so verbunden ist, dass es geeignet ist, sich abwechselnd zwischen einer inaktiven und einer aktiven Konfiguration zu bewegen.

2. Maschine gemäß Anspruch 1, **dadurch gekennzeichnet, dass** die Annäherungs- und Entfernungsrichtung im Wesentlichen senkrecht zur einen Rotationsachse (A) ist.

3. Maschine gemäß einem oder mehr der vorangegangenen Ansprüche, **dadurch gekennzeichnet, dass** die Verstellvorrichtung (9, 2b) mindestens einen ersten Antrieb aufweist, der zwischen den Wulstbrechwerkzeugen (6, 6a) angeordnet ist.

4. Maschine gemäß Anspruch 3, **dadurch gekennzeichnet, dass** die Antriebe zwei an der Zahl und jeweils zwischen dem Rahmen (2) und einem entsprechenden der Wulstbrechwerkzeuge (6, 6a) angeordnet sind, wodurch die Bewegungen der Wulstbrechwerkzeuge (6, 6a) voneinander unabhängig sind.

5. Maschine gemäß einem oder mehr der vorangegangenen Ansprüche, **dadurch gekennzeichnet, dass** mindestens eine der Bewegungsbaueinheiten (9) einen Teleskoparm (10) zum Tragen des entsprechenden Wulstbrechwerkzeugs (6, 6a) aufweist.

6. Maschine gemäß einem oder mehr der vorangegangenen Ansprüche, **dadurch gekennzeichnet, dass** mindestens eine der Bewegungsbaueinheiten (9) von der automatischen Bauart ist.

7. Maschine gemäß einem oder mehr der vorangegangenen Ansprüche, **dadurch gekennzeichnet, dass** mindestens eine der Bewegungsbaueinheiten (9) mindestens einen zweiten fluidbetriebenen Linearantrieb aufweist.

8. Maschine gemäß Anspruch 7 als Unteranspruch von Anspruch 5, **dadurch gekennzeichnet, dass** der zweite Antrieb funktional mit dem Teleskoparm (10) verbunden ist, wobei das Öffnen/Schließen des zweiten Antriebs geeignet ist, das Ausfahren/Einziehen des Teleskoparms (10) anzutreiben.

9. Maschine gemäß Anspruch 7, **dadurch gekennzeichnet, dass** mindestens eine der Bewegungsbaueinheiten (9) Vorrichtungen zum Betätigen des zweiten Antriebs aufweist.

10. Maschine gemäß Anspruch 7, **dadurch gekennzeichnet, dass** die Verstellvorrichtung (9) eine Ventilvorrichtung, die mit dem zweiten Antrieb funktional verbunden ist, und mindestens ein Verstellelement zum Betätigen der Ventilvorrichtung aufweist, das geeignet ist, abwechselnd das öffnen oder Schließen des zweiten Antriebs anzutreiben.

11. Maschine gemäß Anspruch 10, **dadurch gekennzeichnet, dass** das Verstellelement mindestens einen Hebel, ein Pedal, einen Drucktaster oder dergleichen aufweist.

12. Maschine gemäß einem oder mehr der vorangegangenen Ansprüche, **dadurch gekennzeichnet, dass** beide Bewegungsbaueinheiten (9) entsprechende Teleskoparme (10) zum Tragen des entsprechenden Wulstbrechwerkzeugs (6, 6a) aufweist, die mit entsprechenden zweiten Antrieben verbunden, sind.

13. Maschine gemäß einem oder mehr der vorangegangenen Absprüche, **dadurch gekennzeichnet, dass** jedes einzelne (6, 6a) der Wulstbrechwerkzeuge ein Element (7, 7a) zum Tragen einer Rolle (8, 8a) aufweist, die geeignet ist, zwischen die Felge und die entsprechende seitliche Wand des Reifens eingesetzt zu werden, wobei die Rolle (8, 8a) so mit dem Tragelement (7, 7a) verbunden ist, dass sie frei rotieren kann.

14. Maschine gemäß Anspruch 13, **dadurch gekennzeichnet, dass** sie eine Gelenkvorrichtung (12) aufweist, die zwischen dem einen Montage- und/oder Demontagewerkzeug (5) und dem Tragelement (7a) des zugehörigen Wulstbrechwerkzeugs (6a) angeordnet ist.

15. Maschine gemäß Anspruch 14, **dadurch gekennzeichnet, dass** die Gelenkvorrichtung (12) einen Hebel (13) zum Tragen des ersten Montage- und/oder Demontagewerkzeugs (5) aufweist, bei dem ein Ende gelenkig mit dem Tragelement (7a) verbunden ist dergestalt, dass der Hebel (13) zwischen der inaktiven Konfiguration und der aktiven Konfiguration des einen Montage- und/oder Demontagewerkzeugs (5) hin- und herschwenken kann.

16. Maschine gemäß Anspruch 15, **dadurch gekennzeichnet, dass** das Montage- und/oder Demontagewerkzeug (5) am gegenüberliegenden Ende in Bezug auf das Ende, das gelenkig am Tragelement (7a) angebracht ist, mit dem Hebel (13) verbunden ist.

17. Maschine gemäß Anspruch 15, **dadurch gekennzeichnet, dass** die Gelenkvorrichtung (12) eine Arretiervorrichtung (14) aufweist, um den Hebel (10) in der aktiven Konfiguration des einen Montage- und/oder Demontagewerkzeugs (5) vorübergehend zu arretieren.

18. Maschine gemäß Anspruch 17, **dadurch gekennzeichnet, dass** die Arretiervorrichtung von der Presssitzbauart ist.

19. Maschine gemäß Anspruch 17, **dadurch gekennzeichnet, dass** die Arretiervorrichtung einen Bolzen (14) aufweist, der in entsprechende Passlöcher gesteckt wird, die im Hebel (13) und im Tragelement (7a) gebildet werden.

20. Maschine gemäß Anspruch 15, **dadurch gekennzeichnet, dass** das eine Montage- und/oder Demontagewerkzeug (5) so mit dem Hebel (13) verbunden ist, dass es zwischen einer Konfiguration zum Einsetzen zwischen die Felge und den Reifen und einer Konfiguration zum Ergreifen und Bewegen des Reifens gelenkig ist.

21. Maschine gemäß Anspruch 20, **dadurch gekennzeichnet, dass** sie eine Verstellbaueinheit (16) zum Bewegen des einen Montage- und/oder Demontagewerkzeugs (5) zwischen der Einsetzkonfiguration und der Greif- und Bewegungskonfiguration aufweist.

22. Maschine gemäß Anspruch 15, **dadurch gekennzeichnet, dass** der erste Hebel (10) wesentlich länger als das Tragelement (7a) ist, wobei in der aktiven Konfiguration das erste Montage- und/oder Demontagewerkzeug (5) vom Tragelement (7a) über die entsprechende Rolle (8a) hinausragt.

23. Maschine gemäß Anspruch 15, **dadurch gekennzeichnet, dass** der Hebel (13) einen Sitz (15) zum Aufnehmen des Tragelements (7a) des zugehörigen Wulstbrechwerkzeugs (6a) in der aktiven Konfiguration des Montage- und/oder Demontagewerkzeugs (5) aufweist.

24. Maschine gemäß Anspruch 23, **dadurch gekennzeichnet, dass** der Hebel (10) sich aus zwei verbindungsgliedern zusammensetzt, die zueinander parallel und im Abstand angeordnet sind, um den Sitz (15) zu bilden.

25. Maschine gemäß Anspruch 21, **dadurch gekennzeichnet, dass** die Verstellbaueinheit mindestens einen dritten fluidbetriebenen Linearantrieb (16) aufweist.

26. Maschine gemäß Anspruch 25, **dadurch gekennzeichnet, dass** der dritte Antrieb (16) zwischen dem Hebel (10) und dem Montage- und/oder Demontagewerkzeug (5) angeordnet ist.

27. Maschine gemäß einem oder mehr der vorangegangenen Ansprüche, **dadurch gekennzeichnet, dass** die erste Rotationsachse (A) im Wesentlichen waagerecht ist.

28. Maschine gemäß einem oder mehr der vorangegangenen Ansprüche, **dadurch gekennzeichnet, dass** die zweite Rotationsachse (B) im Wesentlichen senkrecht ist.

29. Maschine gemäß einem oder mehr der vorangegangenen Ansprüche, **dadurch gekennzeichnet, dass** die Fläche (17) in der ersten Konfiguration die Felge um eine im Wesentlichen waagerechte Rotationsachse (A) dreht und in der zweiten Konfiguration die Felge um eine im Wesentlichen senkrechte Rotationsachse (B) dreht, dadurch, dass die Wulstbrechwerkzeuge (6, 6a) und das mindestens eine Montage- und/oder Demontagewerkzeug (5) mit der von der Fläche (17) getragenen Felge in der ersten Konfiguration verbindbar sind, und dadurch, dass die Arbeitsbaueinheit (4) ein zweites Montage- und/oder Demontagewerkzeug (21) aufweist, das mit der von der Fläche (17) getragenen Felge in der zweiten Konfiguration verbindbar ist.

## Revendications

1. Une machine (1) pour le montage et le démontage des pneus et des jantes de roues de véhicules, comprenant
un châssis (2, 2a),
des moyens de préhension et de rotation (3), supportés par ledit châssis (2, 2a), pour la préhension et la mise en rotation d'une jante de la roue d'un véhicule autour d'au moins un axe de rotation (A, B), lesdits moyens de préhension et de rotation (3), comprenant une surface (17) pour supporter ladite jante, qui est apte à assumer alternativement une première et une deuxième configuration qui sont sensiblement perpendiculaires mutuellement, par lesquelles les moyens de préhension et de rotation (3) tournent la jante que l'on doit travailler alternativement autour d'un premier (A) et d'un deuxième (B) axe de rotation sensiblement perpendiculaire mutuellement, et
un groupe de travail (4), supporté par ledit châssis (2, 2a),
ledit groupe de travail (4) étant pourvu d'au moins un outil pour le montage/démontage (5 ; 5, 21) pour monter/démonter un pneu sur/de ladite jante, et comprenant au moins une paire d'outils de détalonnage (6, 6a) qui peuvent être associés sur les côtés opposés de ladite jante, sont associés à des moyens d'actionnement (9, 2b) pour l'actionnement de translation dans une direction qui est sensiblement parallèle par rapport audit axe de rotation (A), et sont associés respectivement à des groupes de mouvement mutuellement indépendants (9,10) pour le mouvement dans une direction d'approchement et d'espacement par rapport audit axe de rotation (A),
ladite machine étant ***caractérisée en ce que***
ledit outil pour le montage/démontage (5) est associé à un (6a) desdits outils de détalonnage apte à se déplacer alternativement entre une configuration inactive et une configuration active.

2. Machine selon la revendication 1, ***caractérisée en ce que*** ladite direction d'approchement et d'espacement est sensiblement perpendiculaire audit axe de rotation (A).

3. Machine selon l'une ou plusieurs des revendications précédentes, ***caractérisée en ce* que** lesdits moyens d'actionnement (9, 2b) comprennent au moins un premier vérin, qui est interposé entre lesdits outils de détalonnage (6, 6a).

4. Machine selon la revendication 3, ***caractérisée en ce que*** lesdits actionneurs sont deux et sont chacun interposé entre ledit châssis (2) et un desdits outils de détalonnage correspondant (6, 6a), où les mouvements des outils de détalonnage (6, 6a) sont mutuellement indépendants.

5. Machine selon l'une ou plusieurs des revendications précédentes, ***caractérisée en ce* qu'**au moins un desdits groupes de mouvement (9) comprend un bras télescopique (10) pour supporter l'outil de détalonnage correspondant (6, 6a).

6. Machine selon l'une ou plusieurs des revendications précédentes, ***caractérisée en ce qu*'**au moins un de ces groupes de mouvement (9) est du type automatique.

7. Machine selon l'une ou plusieurs des revendications précédentes, ***caractérisée en ce qu*'**au moins un desdits groupes de mouvement (9) comprend au moins un deuxième vérin alinéaire du type à fluide.

8. Machine selon la revendication 7 et dépendante de la revendication *5, **caractérisée en ce que*** ledit deuxième vérin est fonctionnellement associé audit bras télescopique (10), l'ouverture/fermeture du deuxième vérin étant apte à actionner l'extension/contraction du bras télescopique (10).

9. Machine selon la revendication 7, ***caractérisée en ce* qu'**au moins un desdits groupes de mouvement (9) comprend des moyens pour actionner ledit deuxième vérin.

10. Machine selon la revendication 7, ***caractérisée en ce que*** lesdits moyens d'actionnement (9) comprennent des moyens du type à valve qui sont fonctionnellement associés audit deuxième vérin et au moins un élément d'actionnement pour actionner lesdits moyens à valve qui est apte à actionner alternativement l'ouverture ou la fermeture dudit deuxième vérin.

11. Machine selon la revendication 10, ***caractérisée en ce que*** ledit élément d'actionnement comprend au moins un levier, une pédale, un bouton-poussoir ou analogue.

12. Machine selon l'une ou plusieurs des revendications précédentes, ***caractérisée en ce que*** deux de ces groupes de mouvement (9) comprennent des bras télescopiques respectifs (10) pour soutenir l'outil de détalonnage correspondant (6, 6a), qui sont associés avec des deuxièmes actionneurs respectifs.

13. Machine selon l'une ou plusieurs des revendications précédentes, ***caractérisée en ce que*** chacun (6, 6a) desdits outils de détalonnage comprend un élément (7, 7a) de support d'un rouleau (8, 8a) qui est apte à être inséré entre ladite jante et la paroi latérale correspondante dudit pneumatique, le rouleau (8, 8a) étant associé à l'élément de support (7, 7a) de façon qu'il puisse tourner librement.

14. Machine selon la revendication 13, ***caractérisée en ce* qu'**elle comprend des moyens d'articulation (12), qui sont interposés entre ledit outil pour le montage/démontage (5) et l'élément de support (7a) dudit outil de détalonnage (6a).

15. Machine selon la revendication 14, ***caractérisée en ce que*** lesdits moyens d'articulation (12) comprennent un levier (13) pour supporter ledit premier outil pour le montage/démontage (5), qui a une extrémité qui est associée de manière articulée audit élément de support (7a) de façon que ledit levier (13) puisse osciller entre ladite configuration inactive et ladite configuration active dudit outil pour le montage/démontage (5).

16. Machine selon la revendication 15, ***caractérisée en ce que*** ledit outil pour le montage/démontage (5) est associé avec ledit levier (13) à l'extrémité opposée par rapport à ladite extrémité qui est articulée avec ledit élément de soutien (7a).

17. Machine selon la revendication 15, ***caractérisée en ce que*** lesdits moyens d'articulation (12) comprennent des moyens de fermeture (14) pour verrouilleur temporairement ledit levier (10) dans la configuration active dudit outil pour le montage/démontage (5).

18. Machine selon la revendication 17, ***caractérisée en ce que*** lesdits moyens de fermeture sont du type à frettage.

19. Machine selon la revendication 17, ***caractérisée en ce que*** lesdits moyens de fermeture comprennent une broche (14) qui est insérée dans des trous correspondants formes dans ledit levier (13) et dans ledit élément de support (7a).

20. Machine selon la revendication *15, **caractérisée en ce que*** ledit outil pour le montage/démontage (5) est associé audit levier (13) de façon qu'il soit articulé entre une configuration pour l'insertion entre ladite jante et ledit pneumatique et une configuration de préhension et de déplacement dudit pneumatique

21. Machine selon la revendication 20, ***caractérisée en ce* qu'**elle comprend un groupe d'actionnement (16) pour le déplacement dudit outil pour le montage/démontage (5) entre la configuration d'insertion et la configuration de préhension et de déplacement.

22. Machine selon la revendication 15, ***caractérisée en ce que*** ledit levier (10) est sensiblement plus long que ledit élément de support (7a), le premier outil pour le montage/démontage (5) saillant de l'élément de support (7a) au-delà du rouleau correspondant (8a) dans la configuration active.

23. Machine selon la revendication *15, **caractérisée en ce que*** ledit levier (13) comprend un siège (15) pour l'accueil dudit élément de support (7a) du respectif outil de détalonnage (6a) dans la configuration active dudit outil pour le montage/démontage (5).

24. Machine selon la revendication 23, ***caractérisée en ce que*** ledit levier (10) est constitué par deux liaisons, qui sont mutuellement parallèles et espacées de manière à former ledit siège (15).

25. Machine selon la revendication 21, ***caractérisée en ce que*** ledit groupe d'actionnement comprend un troisième vérin linéaire du type à fluide (16).

26. Machine selon la revendication 25, ***caractérisée en ce que*** ledit troisième vérin (16) est interposé entre ledit levier (10) et ledit outil pour le montage/démontage (5).

27. Machine selon l'une ou plusieurs des revendications précédentes, ***caractérisée en ce que*** ledit premier axe de rotation (A) est sensiblement horizontal.

28. Machine selon l'une ou plusieurs des revendications précédentes, ***caractérisée en ce que*** ledit deuxième axe de rotation (B) est sensiblement vertical.

29. Machine selon l'une ou plusieurs des revendications précédentes, ***caractérisée en ce que*** ladite surface (17), dans ladite première configuration, tourne ladite jante autour d'un axe de rotation sensiblement horizontal (A) et, dans ladite deuxième configuration, tourne ladite jante autour d'un axe de rotation sensiblement vertical (B), ***en ce que*** lesdits outils de étalonnage (6, 6a) et au moins un desdits outils pour le montage/démontage (5) sont associables à ladite jante supportée par ladite surface (17) dans la première configuration, et ***en ce que*** ledit groupe de travail (4) comprend un deuxième outil pour le montage/démontage (21), qui est associable avec ladite jante supportée par ladite surface (17) dans la deuxième configuration.
